# EUROPEAN PATENT APPLICATION

(11) **EP 3 291 150 A1**
(43) Date of publication of application: **07.03.2018**
(21) Application number: 16186087.9
(22) Date of filing: 29.08.2016
(51) Int. Cl.: G06Q 10/04, G06Q 10/06

(54) **COMPUTER-IMPLEMENTED PRODUCT DEVELOPMENT METHOD**

(71) Applicant: Siemens Aktiengesellschaft, 80333 München (DE)
(72) Inventor: Gehmeyr, Andreas, 36039 Fulda (DE); Horn, Stefan, 91056 Erlangen (DE); Höfler, Werner, 90542 Eckental (DE); Kochseder, Robert, 91080 Spardorf (DE); Rettner, Juliane, 90411 Nürnberg (DE)

(57) **Abstract**

The gist of is the invention is a computer implemented product development method characterized in an algorithmic formulation of an optimization problem within a multidimensional solution space and a following software-technical optimization which is in the sense of a control loop permanently adjusting the running development process in direction of a calculated optimum. Therefore a three-dimensional solution space with a purpose dimension, a architecture dimension and a strategy dimension have to be established, market needs strategic imperatives, architecture and for each dimension quality criteria have to be stored and after that the three dimensions have to be balanced according to its fulfillment of the quality criteria after each phase of the development. The advantage is a higher efficiency in development due to a more holistic approach which is better reflecting the interdependencies within a real production development process. Further, prioritization in each step does follow efficiency optimum, changes can be handled based on causalities and ownership is split up in an aggregatable way.

## Description

### Technical Field

The present disclosure relates to the field of product development methods and their implementation as a development system on a computer wherein the development method is starting from market requirements, then considering the existing architecture options and after that regarding the implementation of the developed product.

### Background Art

A classical development setup is process driven and includes the following basic steps:
1. Market Requirements provided by product managers
2. Architecture provided by Architects
3. Implementation provided by Development Departments
4. Test provided by Testing Departments

The main issues here are, that the process is not a causality chain and the so called process owner only checks milestones. Therefore prioritization in each step does not follow efficiency optimum, changes cannot be handled based on causalities and ownership is split up in a non-aggregatable way.

Therefore, there is a **need** for a computerimplemented product development method with higher efficiency in development, which is a more holistic approach, which is better reflecting the interdependencies within a real production development process and which preferably avoids the above mentioned disadvantages.

According to the invention this need is settled by a method as it is defined by the features of independent claim 1.

Preferred embodiments and an appropriate computer program product are subject of the dependent claims.

### Summary of the invention

The gist of is the invention is a computer implemented product development method characterized in an algorithmic formulation of an optimiza-tion problem within a multidimensional solution space and a following software-technical optimization which is in the sense of a control loop permanently adjusting the running development process in direction of a calculated optimum. Therefore a three-dimensional solution space with a purpose dimension, a architecture dimension and a strategy dimension have to be established, market needs strategic imperatives, architecture and for each dimension quality criteria have to be stored and after all the three dimensions have to be balanced according to its fulfillment of the quality criteria after each phase of the development. The advantage is a higher efficiency in development due to a more holistic approach which is better reflecting the interdependencies within a real production development process. Further, prioritization in each step does follow efficiency optimum, changes can be handled based on causalities and ownership is split up in an aggregatable way.

### Brief Description of the Drawings

The method and the computer program according to the invention are described in more detail herein below by way of an exemplary embodiment and with reference to the attached drawings, in which:
- Fig. 1: shows a schematic block diagram illustrating the basics of the inventive development method,
- Fig. 2: shows a matrix-like diagram illustrating dimensions and phases of the inventive development method and
- Fig. 3: shows a diagram with dimensions of an embodiment of the inventive development method.

### Detailed description of exemplary embodiments

Development efficiency is achieved, if a product is sustainably profitable. Therefore a positive relation has to be achieved, between long term development effort and long term revenue stream. Responsible for this is a so-called "Product Owner".

Major direct contributors for this efficiency relation are costs for product implementation and revenue coming from market. Major issues regarding these contributors are inefficiencies inside of implementation, wrong assumptions regarding or bad documentation of market needs and friction in finding a balanced setup.

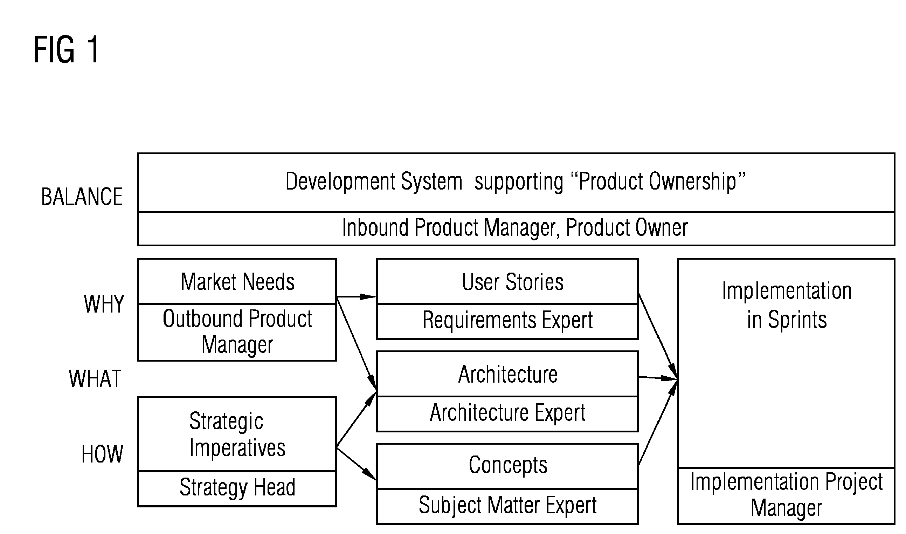

Fig. 1 shows a schematic block diagram illustrating the basics of the inventive development method, wherein three-dimensional development setup with balance is demonstrated. The three dimensions are expressed by the three questions "Why", "What" and "How".

Typically, beginning with the question WHY where an Outbound Product Manager is collecting and evaluating the market needs and with the question **HOW** where a Strategy Head defines the strategic imperatives.

Then in a next step, user stories are derived from the market needs by a Requirements Expert, concepts are derived from the strategic imperatives by a Subject Matter Expert and representing the question WHAT where an architecture is chosen by an Architecture Expert in dependence of the market needs and the strategic imperatives.

The user stories, the architecture and the concepts are leading to an implementation in so called "sprints" which is typically handled by an Implementation Project Manager. "Sprints" are typically part of project- or product management models and are work sections lasting a few weeks for implementing a defined increment of product functionality.

The whole setup is balanced **BALANCE** by an Inbound Product Manager using a development system which is supporting the "product ownership".

The improvement of this approach becomes apparent because this workflow now follows causality chains, see arrows in Fig. 1. By supporting these causalities the overall efficiency and agility are improved.

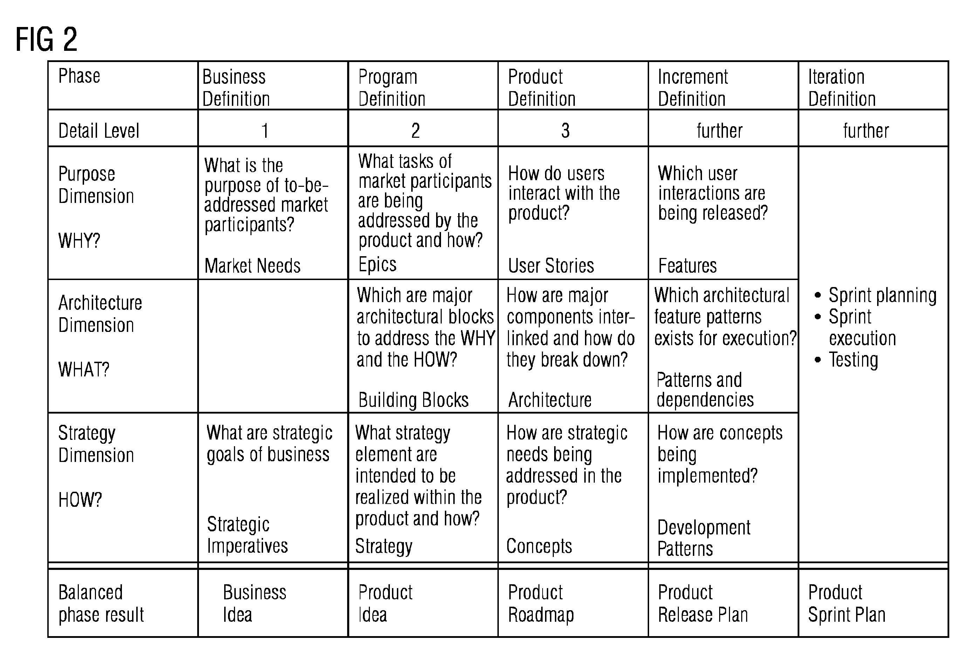

**Fig. 2** shows a matrix-like diagram illustrating dimensions and phases of the inventive development method respectively a stepwise approach to operate in an efficient way.

The horizontal axis represents the phases of a product development, which can also be seen as detail levels, wherein Business Definition is on Detail Level 1, Program Definition is on Detail Level 2, Product Definition is on Detail Level 3, Increment Definition and Iteration Definition are on further Detail Levels.

The vertical axis is representing the purpose dimension **WHY,** the architecture dimension **WHAT,** strategy dimension **HOW** and last but not least a **"Balanced phase result".**

The purpose dimension **WHY** is subdivided into **"Market Needs"** which stands for the question "What is the purpose of to-be-addressed market participants?", **"Epics"** representing the question "What tasks of market participants are being addressed by the product and how?", **"User Stories"** the question "How do users interact with the product?" and **"Features"** the question "Which user interactions are being released?".

The architecture dimension **WHAT** is starting on detail level 2 respectively "Program Definition" and is subdivided into **"Building Blocks"** which stands for the question "Which are major architectural blocks to address the WHY and the HOW?", **"Architecture"** standing for "How are major components interlinked and how do they break down?" and **"Patterns and dependencies"** standing for "Which architectural feature patterns exist for execution?"

Finally, the strategy dimension **HOW** is subdivided into **"Strategic Imperatives"** representing the question "What are strategic goals of business?", **"Strategy"** representing the question "What strategy element are intended to be realized within the product and how?", **"Concepts"** representing the question "How are strategic needs being addressed in the product?" and **"Development Patterns"** representing "How are concepts being implemented?".

After the increment definition, which is subdivided in respect to the three dimensions **WHY, WHAT** an **HOW,** on a further detail level there is the iteration definition which is common to all dimensions and covers **"Sprint planning", "Sprint execution"** and **Testing".**

The **"Balanced phase results"** of the above mentioned phases are finally **"Business Idea", "Product Idea", "Product Roadmap", "Product Release Plan"** and **"Product Sprint Plan".**

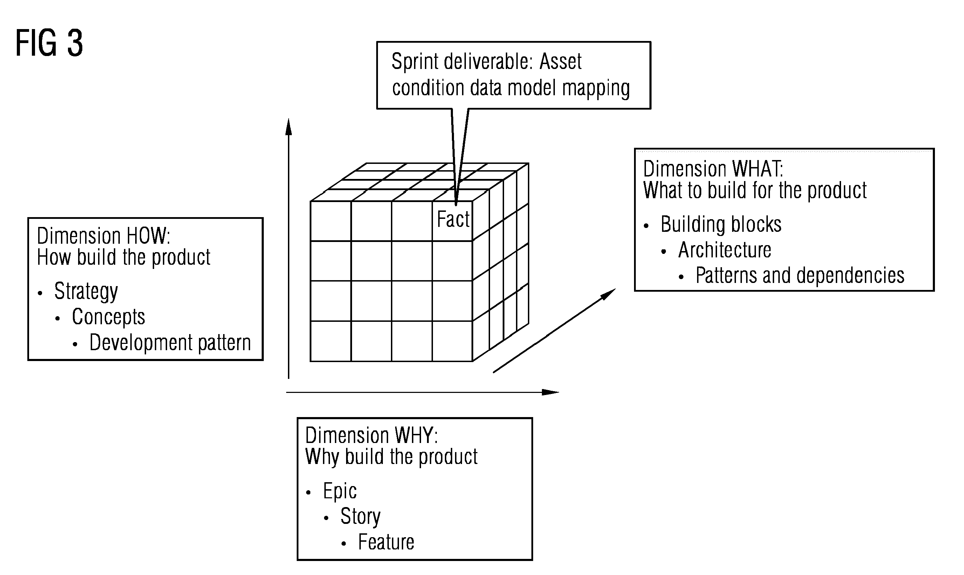

**Fig.3** shows a diagram with the three dimensions of an embodiment of the inventive development method in order to explain invention via a concrete use case.

Here the dimension **HOW** representing the question "How build the product" covers strategy, concepts and development patterns and include e. g. the following concrete statements:
- We drive separate innovations: data and algorithms
- We keep database separate from software analyzing the data
- High level asset database design

The dimension **WHY** stands for "Why build the product" and is encompassing Epic, Story and Feature and includes e. g. the following concrete statements:
- Asset manager provides long term asset planning
- Based on a new temperature measurement, a need for change in the maintenance plan is detected
- Asset condition can be calculated based on temperature values

Finally, the dimension **WHAT** with the meaning of "What to build for the product" is covering Building blocks, Architecture and Patterns and dependencies includes e. g. the following concrete statements:
- Asset Management Service
- Data access layer
- Object relational mapper

Within the trihedron of **HOW, WHY** and **WHAT** a cube of subcubes is depicted with one subcube containing a fact representing the "Sprint deliverable" which means asset condition data model mapping.

The basic algorithmic and structure of the invention is typically based on the following **Data Model:**

### Dimensions and Nodes

- Interactively similar to a mind mapping tool, interactively creating a tree of nodes
- Different trees automatically determine a "cube" of "facts"
- Dimensions and facts are to be kept in referencial integrity
- Navigation allows for easy switching between dimensions

### Facts

- Each intersection of all dimension nodes in all hierarchical levels provides facts
- Facts contain text or documents
- All facts automatically exist, as the dimensional nodes are created
- Dynamics allow for managing this constantly changing set of facts

The basic algorithmic and structure of the invention typically show the following **Dynamics:**

### Dimension modeling

- Addition of a node
- Facts in all dimensional intersections are prepared to exist
- Existing facts of father node are marked, as they potentially have to be newly broken down regarding the new node
- Potentially some semi automatic mechanism can break down once merged facts, as detected

### Removal of a node

- Existing facts are merged to the father facts
- The name of the deleted node must stay available as "tag".
- Existing facts of father node are marked for potential Adaptation

Optionally the invention can be further optimized in terms of "Planing Automation" and "Asynchronous Change Management".

When it comes to Planning Automation:

Additional input, e.g. development patterns mapped to features, pattern development effort ranges and revenue range per feature can be taken into account.
Further, an output like e.g. efficiency optimal backlog sequence of teams can be considered.
As to the algorithm itself, for all features earliest start based on patterns and weighted efficiency contribution earliest start and/or profit and/or risk can be calculated and maximal efficiency based on sequencing feature work items into a given time window can be optimized.

Inputs are for example user stories with revenue models and associated development patterns with cost models, components and team assignments. A typical output is e. g. a sorted list of user stories to be developed.

A basic approach is e.g. to find the maximum amount of revenue potential achievable, still fitting into the overall budget and repeat this calculation on a regular basis to adapt to deviations.

The optimization itself is advantageously done with a "Monte Carlo Simulation", wherein for each possible next to be started user story potential project outcomes based on given Gaussian distributions and boundary conditions are simulated, wherein after simulation a approximation for Gaussian revenue distribution is calculated and wherein then the next to be started user story based on best revenue distribution, e. g. the safest, highest, etc. is selected.

Typical boundary conditions in this context are e. g. the following: Components are assigned to teams. Teams only work on one user story and component at the same time. Once a user story development has been started it shall not be stopped and overall budget has not to be exceeded.

As to Asynchronous Change Management:

Additional input, e.g. Change types like version or variant and/or Escalation types like abstract or visible are gathered within the inventive method. Further, an output like e.g. list of potentially affected other teams/owners is provided. Finally, a recursive algorithm can be used selecting change type and escalation type etc. or otherwise for all dimensions find hierarchically lowest change location and initiate change on hierarchically higher level.
A Change indication in any place (address) of the core model is a typical input. Backlog items addressing to be decided change consequences associated to affected core model are typical outputs here.

Advantageously there are at least the following different types of change:
A type "Version" leads to a new version which needs to be taken care of all dimensional parent nodes. A further type "Variant" leads to variant decisions to be taken care of in all dimensional parent nodes. Finally, a type "Transparent" needs no further escalation resp. a considered change will be handled internally and leads to an implementation task.

The inventive method typically escalates recursively with new changes on affected parent nodes and each escalation item is represented as backlog entry in task management system.

The invention also provides a computer program or a computer program product for carrying out any of the methods described herein. A computer program embodying the invention may be stored on a computer-readable medium, or it could, for example, be in the form of a signal such as a downloadable data signal provided from an Internet website, or it could be in any other form.

## Claims

1. Computer-implemented product development method comprising
- establishing a three-dimensional solution space with a purpose dimension (WHY), a architecture dimension (WHAT), and a strategy dimension (HOW);
- providing market needs for the purpose dimension and strategic imperatives for the strategic dimension;
- deriving an architecture for the architecture dimension based on market needs and strategic imperatives;
- storing for each dimension quality criteria;
- balancing the three dimensions according to its fulfillment of the quality criteria after each phase;
- receiving a balanced phase result (Fact) after each phase;
- evaluating and updating quality criteria after each phase;
- controlling the development process by using the balanced phase result as a base for the next phase.

2. Method according to claim 1,
- wherein a change of prioritization of the dimensions is done by updating quality criteria after each phase.

3. Method according to claim 1 or 2,
further **characterized in**
- using development patterns mapped to features and/or pattern development effort ranges and/or revenue range per feature as an additional input for the balancing.

4. Method according to any one of the preceding claims,
further **characterized in**,
- using efficiency optimal backlog sequence of teams as a balancing result.

5. Method according to any one of the preceding claims,
further **characterized in**,
- sequencing feature work items into a given time window during the balancing.

6. Computer program product comprising computer executable instructions, which when loaded on computer system, provides a development system with the functionality of the method according to any one of the preceding claims.

7. Development system comprising:
a memory storing computer-readable instructions; and
one or more processors configured to execute the computer-readable instructions such that functionality of the method according to any one of the preceding claims.
